# EUROPEAN PATENT APPLICATION

(11) **EP 1 093 059 A2**
(43) Date of publication of application: **18.04.2001**
(21) Application number: 00308900.0
(22) Date of filing: 10.10.2000
(51) Int. Cl.: G06F 17/28

(54) **Translating apparatus and method, and recording medium**

(30) Priority: 15.10.1999 JP 29387399
(71) Applicant: SONY CORPORATION, Tokyo 141 (JP)
(72) Inventor: Hiroe, Atsuo, c/o Sony Corporation, Tokyo 141 (JP); Mori, Haru, c/o Sony Corporation, Tokyo 141 (JP); Asano, Yasuharu, c/o Sony Corporation, Tokyo 141 (JP); Ogawa, Hiroaki, c/o Sony Corporation, Tokyo 141 (JP)
(74) Representative: Pratt, Richard Wilson

(57) **Abstract**

A translating apparatus includes a speech recognition unit, a machine translation unit, and a speech synthesizing unit. The speech recognition unit gradually recognizes input speech, and sequentially supplies the result of the speech recognition to the machine translation unit. The machine translation unit gradually generates a translation by gradually translating the result of the speech recognition from the speech recognition unit. The translation is supplied to the speech synthesizing unit. Based on the result of comparison between the present translation gradually generated by the machine translation unit and the last translation, the speech synthesizing unit controls the output of synthesized speech corresponding to the translation.

## Description

### BACKGROUND OF THE INVENTION

### 1. Field of the Invention

The present invention relates to: a translating apparatus and method, a recording medium; and to a computer program product. An embodiment of the present invention relates to a translating apparatus and method that gradually recognizes, for example, input speech, gradually translates the result of the speech recognition, and gradually provides the result of the translation, and to a recording medium used with the apparatus and the method.

### 2. Description of the Related Art

A speech translation system that includes a speech recognition unit, a translator unit, and a speech synthesizing unit is known as a tool for enabling communication between users speaking in different languages such as Japanese and English. In this speech translation system, speech in Japanese is recognized, and the result of the speech recognition is translated into English and is output as synthesized speech, and speech in English is recognized, and the result of the speech recognition is translated into Japanese and is output as synthesized speech. Accordingly, the English-speaking user can hear in English speech from the Japanese-speaking user, while the Japanese speaking user can hear in Japanese speech from the English-speaking user, whereby both users can have a conversation and understand each other.

In the above-described conventional speech translation system, after the entirety of input speech is recognized by, for example, the speech recognition unit and the result of the speech recognition is obtained, the result of the speech recognition is translated by the translator unit. After the entire result of the speech recognition is translated and the result of the translation is obtained, speech is synthesized by the speech synthesizing unit.

Accordingly, in the conventional speech translation system, a time from the input of the speech to the output of the synthesized speech according to the result of the translation of the input speech may increase. This causes a pause to occur, which may hinder a smooth communication between the users.

For solving this problem, a method called "partial translation" or "gradual translation" is known which is disclosed in documents such as Japanese Patent No. 2758851, and "Gradual Generating Method for Translation of Spoken English and Japanese" (Japanese Information Processing Institute Magazine, "Natural Language Processing", vol. 132-13, July 23, 1999).

In gradual translation, a speech translation unit gradually recognizes input speech, and partially outputs the result of the speech recognition. A translator unit gradually translates the partial speech recognition result (the result of speech recognition of the beginning part to the present part of the input speech)(hereinafter also referred to as the "partial recognition result") from the speech recognition unit, and partially outputs the result of the translation corresponding to the input speech.

However, the documents provide no disclosure about a method in which, in the gradual translation, the result of partial translation corresponding to the result of partial speech recognition, output from the translator unit, is gradually presented to the user, including a speech output.

### SUMMARY OF THE INVENTION

An illustrative embodiment of the present invention to provide a translating apparatus and method that gradually presents a translation obtained by gradual translation to a user, a recording medium used with the apparatus and method.

According to an aspect of the present invention, there is provided a translating apparatus for translating a text gradually input in a predetermined language and outputting a translation in another language. The translating apparatus includes a translator unit for gradually generating the translation by gradually translating the gradually input text, a providing unit for gradually providing the gradually generated translation, and a control unit for controlling. based on the result of comparison between the present gradually-generated translation and the last translation, the provision of the present translation.

Preferably, the control unit controls the provision of the present translation so that a portion of the present translation which is newly added to the last translation is provided.

The control unit may control the provision of the present translation so that the present translation includes a portion in which at least part of the last translation is changed, and when a portion of the last translation which corresponds to the changed part has already been provided, the present translation is provided again.

The control unit may control the provision of the present translation so that the present translation is provided again after a message representing re-provision of the present translation is provided.

The translating apparatus may further include a speech recognition unit for gradually recognizing input speech and gradually outputting the result of the speech recognition as the input text.

Preferably, the providing unit generates and outputs synthesized speech corresponding to the present translation.

According to another aspect of the present invention, there is provided a translating method for translating a text gradually input in a predetermined language and outputting a translation in another language. The translating method includes the steps of gradually generating the translation by gradually translating the gradually input text, gradually providing the translation gradually generated in the translating step, and controlling, based on the result of comparison between the present translation gradually generated in the translating step and the last translation, the provision of the present translation.

According to a further aspect of the present invention, there is provided a computer-readable recording medium containing a program for controlling a translating process for translating a text gradually input in a predetermined language and outputting a translation in another language. The program includes the steps of gradually generating the translation by gradually translating the gradually input text, gradually providing the translation gradually generated in the translating step, and controlling, based on the result of comparison between the present translation gradually generated in the translating step and the last translation, the provision of the present translation.

In an embodiment of the present invention, a text gradually input is gradually translated to gradually generate a translation. The translation is gradually provided. The present gradually-generated translation, and the last translation are compared, and based on the result of the comparison, the provision of the translation is controlled. Accordingly, the translation can be gradually provided to a user.

### BRIEF DESCRIPTION OF THE DRAWINGS

For a better understanding of the present invention, reference will now be made by way of example to the accompanying drawings in which:
Fig. 1 is a block diagram showing an embodiment of the present invention which is applied to a speech translation system;
Fig. 2 is a block diagram showing an example of the speech recognition unit 1 shown in Fig. 1;
Fig. 3 is an illustration of gradual speech recognition by the speech recognition unit 1 shown in Fig. 1;
Fig. 4 is a block diagram showing an example of the machine translation unit 2 shown in Fig. 1;
Figs. 5A and 5B are illustrations of gradual translation by the machine translation unit 2 shown in Fig. 1;
Fig. 6 is a block diagram showing an example of the speech synthesizing unit 3 shown in Fig. 1;
Fig. 7 is an illustration of data transfer between the speech recognition unit 1 and the machine translation unit 2 and data transfer between the machine translation unit 2 and the speech synthesizing unit 3;
Fig. 8 is a flowchart illustrating the operation process of the speech recognition unit 1 shown in Fig. 1;
Fig. 9 is a flowchart illustrating the operation process of the machine translation unit 2 shown in Fig. 1;
Fig. 10 is a flowchart illustrating the operation process of the speech synthesizing unit 3 shown in Fig. 1;
Fig. 11A is an illustration of partial recognition results, and Fig. 11B is an illustration of partial translation results;
Fig. 12A is an illustration of partial recognition results, and Fig. 12B is an illustration of partial translation results; and
Fig. 13 is a block diagram showing an embodiment of the present invention which is applied to a computer.

### DESCRIPTION OF THE PREFERRED EMBODIMENTS

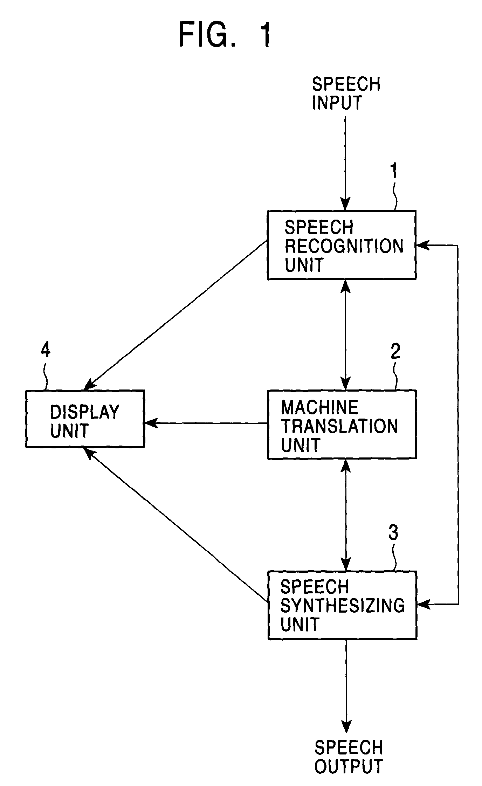

Fig. 1 shows an embodiment of the present invention which is applied to a speech translation system ("system" means a physical collection of a plurality of component units, and it does not matter if each unit is provided in the same housing).

By way of example, when speech in Japanese is input to the speech translation system, an English translation from the speech is output, and when speech in English is input to the speech translation system, a Japanese translation from the speech is output. This enables a Japanese-speaking user and an English-speaking user to have a conversation with each other.

Speech from each user is input to a speech recognition unit 1. The speech recognition unit 1 recognizes the input speech, and outputs text and other accompanying information as the result of the speech recognition to a machine translation unit 2, a display unit 4, etc., as required.

The machine translation unit 2 analyzes the speech recognition result output from the speech recognition unit 1, performs machine translation of the input speech into a language different from the language of the input speech (in this embodiment, Japanese is translated into English and English is translated into Japanese), and outputs text and other accompanying information as the result of the machine translation to a speech synthesizing unit 3, the display unit 4, etc., as required. The speech synthesizing unit 3 performs a speech-synthesizing process based on outputs from the voice recognition unit 1, the machine translation unit 2, etc., and outputs the result of translation of the input speech, for example, synthesized speech, into a language different from the language of the input speech.

The display unit 4 is formed by, for example, a liquid crystal display, and displays the result of the speech recognition by the speech recognition unit 1, the result of the machine translation by the machine translation unit 2, etc., as required.

According to the above-described speech translation system, when speech in, for example, Japanese is input to the system, the speech recognition unit 1 recognizes the input speech and supplies the recognized speech to the machine translation unit 2. The machine translation unit 2 performs machine translation of the result of the speech recognition by the speech recognition unit 1 into English and supplies the translation to the speech synthesizing unit 3. Synthesized speech corresponding to the result of the speech recognition is generated and output by the speech synthesizing unit 3. Also, when speech in English is input to the system, the speech recognition unit 1 recognizes the input speech and supplies the recognized speech to the machine translation unit 2. The machine translation unit 2 performs machine translation of the result of the speech recognition from the speech recognition unit 1 into Japanese and supplies the translation to the speech synthesizing unit 3. Synthesized speech corresponding to the result of the speech recognition is generated and output by the speech synthesizing unit 3.

Accordingly, the speech translation system shown in Fig. 1 enables the English-speaking user to understand speech in Japanese from the Japanese-speaking user, and enables the Japanese-speaking user to understand speech in English from the English-speaking user. This enables a dialog between the Japanese-speaking user and the English-speaking user.

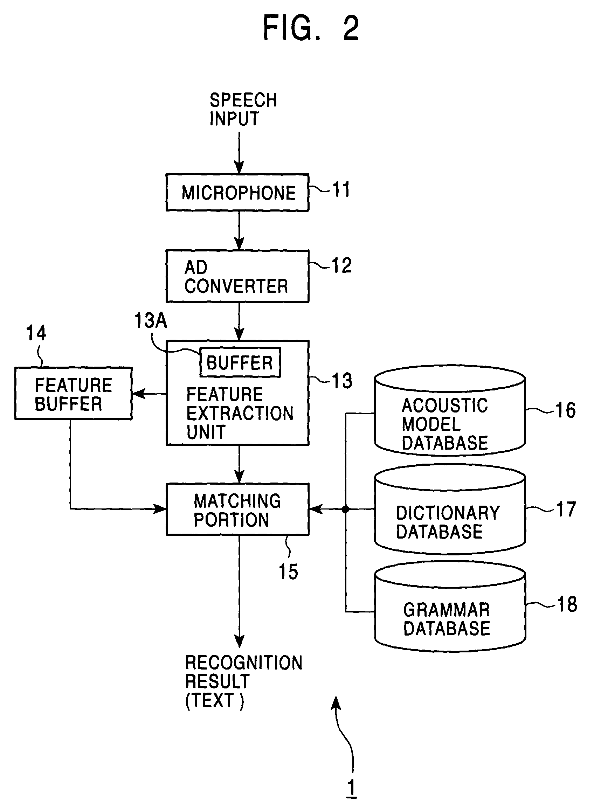

Referring to Fig. 2, the structure of the speech recognition unit 1 shown in Fig. 1 is shown.

Speech from a user is input to a microphone 11, where the speech is converted into a speech signal as an electric signal. The speech signal is supplied to an analog-to-digital converter 12. In the A/D converter 12, the speech signal from the microphone 11, which is an analog signal, is sampled, quantized, and converted into speech data as a digital signal. The speech data is supplied to a feature extraction portion 13.

The feature extraction portion 13 extracts, for each appropriate number of frames, feature parameters, such as a spectrum, a linear predictive coefficient, a cepstrum coefficient, and a line spectrum logarithm, from the speech data from the analog-to-digital converter 12, and supplies the extracted feature parameters to a feature buffer 14 and a matching portion 15. The feature buffer 14 temporarily stores the feature parameters from the feature extraction portion 13. The feature extraction portion 13 includes a buffer 13A for temporarily storing the speech data output from the analog-to-digital converter 12. The speech data sequentially output by the analog-to-digital converter 12 is stored in the buffer 13A, and is sequentially processed by the feature extraction portion 13.

The matching portion 15 recognizes, based on the feature parameters from the feature extraction portion 13 or the feature parameters stored in the feature buffer 14, the speech input to the microphone 11 (input speech) by referring to an acoustic model database 16, a dictionary database 17, and a grammar database 18, as required.

The acoustic model database 16 contains acoustic models representing acoustic features such as phonemes and syllables in each language corresponding to the speech to be recognized. As one of the acoustic models, for example, the Hidden Markov Model (HMM) can be used. The dictionary database 17 contains a word dictionary describing information on the pronunciation of each word or phrase to be recognized, and a language mode describing catenative relationships among phonemes and syllables. The grammar database 18 contains grammar rules describing how words registered in the word dictionary of the dictionary database 17 are catenated (combined) with one another. As the grammar rules, rules based on a context free grammar, a statistical probability of word concatenation, etc., can be used.

The matching portion 15 connects some of the acoustic models stored in the acoustic model database 16 by referring to the word dictionary of the dictionary database 17, thereby forming an acoustic model (word model) of each word. The matching portion 15 connects several word models by referring to the grammar rules stored in the grammar database 18, and uses the thus connected word models to recognize the speech input to the microphone 11 based on the feature parameters by, for example, the HMM.

The result of the speech recognition by the matching portion 15 is output, for example, in text.

When the matching portion 15 must process the input speech again, it can use the feature parameters stored in the feature buffer 14 to perform the processing, whereby the need for requesting the user to speak again is eliminated.

In the speech recognition unit 1, when speech is input to the microphone 11, the speech is gradually processed from the time the input of the speech is initiated (the start of a speech interval), whereby the result of recognition of the speech input from the start of the input to the present time, in other words, the partial recognition result (in addition to the result of recognition of part of the input speech, including the entirety of the result of the speech recognition) is gradually output.

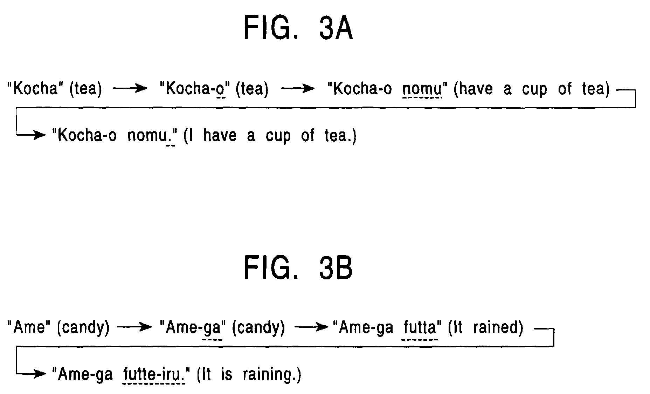

Specifically, when the speech input to the microphone 11 is, for example, "Kocha-o nomu.", as the speech "Kocha-o nomu." is sequentially input to the speech recognition unit 1, partial recognition results, "Kocha" (tea), "Kocha-o" (tea), "Kocha-o nomu" (have a cup of tea), and " Kocha-o nomu." are sequentially output from the speech recognition unit 1, as shown in Fig. 3A. When the speech input to the microphone 11 is, for example, "Ame-ga futte-iru.", as the speech "Ame-ga futte-iru." is sequentially input to the speech recognition unit 1, partial recognition results, "Ame" (candy), "Ame-ga" (candy), "Ame-ga futta" (It rained), and "Ame-ga futte-iru." (It is raining.) are sequentially output from the speech recognition unit 1, as shown in Fig. 3B.

The periods in the partial Japanese recognition results each represent the end of the speech interval. Thus, after each period, a phrase as the result of speech recognition does not follow. In Figs. 3A and 3B, each dotted underline indicates the present partial recognition result added to the last partial recognition result, and each underline indicates one of the present partial recognition results which has been changed.

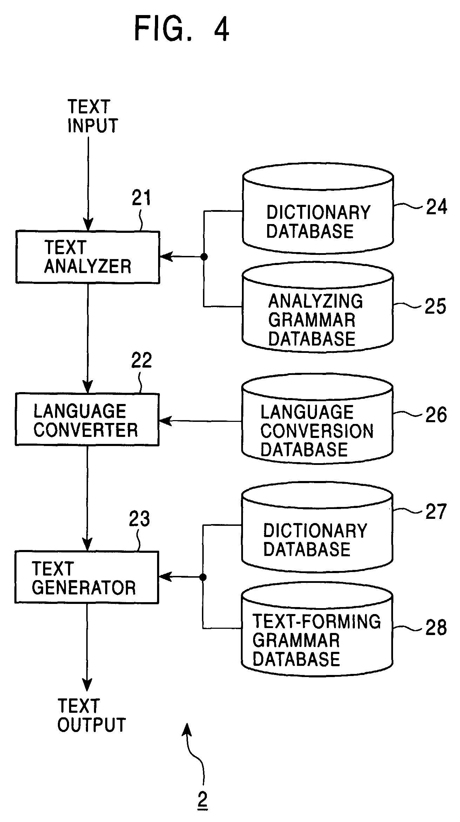

Referring to Fig. 4, the structure of the machine translation unit 2 shown in Fig. 1 is shown.

A text or the like, which is the result of the speech recognition output from the speech recognition unit 1, is input to a text analyzer 21. The text analyzer 21 analyzes the input text by referring to a dictionary database 24 and an analyzing grammar database 25.

The dictionary database 24 contains a word dictionary describing the representation of each word, word class Information required for applying an analyzing grammar, etc. The analyzing grammar database 25 contains analyzing grammar rules describing restrictions on word concatenation based on information on words described in the word dictionary. Based on the word dictionary and the analyzing grammar rules, the text analyzer 21 performs analyses of the input text, such as a morphemic analysis and a syntactic analysis, and extracts language information such as information on words and sentence structures constituting the input text. Analyzing methods for use in the text analyzer 21 include, for example, a regular grammar, a context free grammar, and a grammar using a statistical probability of word concatenation.

The language information as the result of the analyses of the input text, obtained by the text analyzer 21, is supplied to a language converter 22. The language converter 22 converts language information on the language of the input text into language information on the language of the result of translation by referring to a language conversion database 26.

The language conversion database 26 contains language conversion data such as conversion patterns (templates) from language information on an input language (the language of an input to the language converter 22) into language information on an output language (the language of an output from the language converter 22), contrastive examples between the input language and the output language, and a thesaurus used for calculating resemblance between the contrastive examples and the input language. The language converter 22 converts, based on the language conversion data, the language information on the language of the input text into language information on the output language.

The language information on the output language. obtained by the language converter 22, is supplied to a text generator 23. The text generator 23 generates a text as a translation from the input text by referring to a dictionary database 27 and a text-forming grammar database 28.

The dictionary database 27 contains a word dictionary describing information such as word classes and conjugations of words required for generating a sentence in the output language. The text-forming grammar database 28 contains text-forming grammar rules such as conjugation rules and word-order limitations for words required for generating a sentence in the output language. The text generator 23 converts, based on the word dictionary and the text-forming grammar rules, the language information from the language converter 22 into a text, and outputs the text.

An incomplete sentence or phrase may be input to the machine translation unit 2. As described above, partial recognition results as the input incomplete sentence or phrase, gradually output from the speech recognition unit 1, are sequentially translated, and corresponding translation results, namely, partial translation results are gradually output.

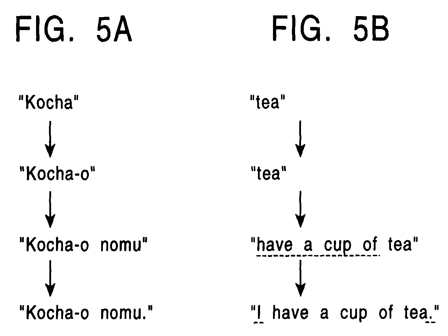

Specifically, when the speech input to the microphone 11 is, for example, "Kocha-o nomu.", the speech recognition unit 1 sequentially outputs partial recognition results, "Kocha" (tea), "Kocha-o", "Kocha-o nomu", and "Kocha-o nomu.", as shown in Fig. 5A similar to Fig. 3A. The machine translation unit 2 gradually translates the partial recognition results and sequentially outputs partial recognition results. "tea", "tea", "have a cup of tea", and "I have a cup of tea", as shown in Fig. 5B.

The period in the last partial translation result indicates the end of a translation. Accordingly, after the period, a phrase as a translation result does not follow. In Fig. 5B, each underlines indicates a part of the present partial translation result which is added to the last partial translation result.

From the comparison between the partial recognition results shown in Fig. 5A and the partial translation results shown in Fig. 5B, it is understood that, when the partial recognition result changes from "Kocha" to "Kocha-o", the corresponding translation result "tea" remains unchanged, and it is understood that, even when the partial recognition result slightly changes from "Kocha-o" to "Kocha-o nomu" (even when "nomu" is only added), the partial translation result may change from "tea" to "have a cup of tea".

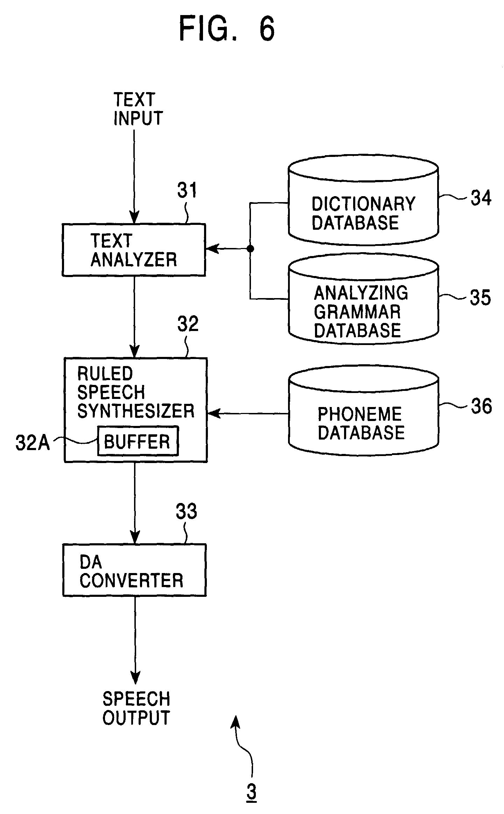

Referring to Fig. 6, the structure of the speech synthesizing unit 3 shown in Fig. 1 is shown.

The text as each partial translation result output by the machine translation unit 2 is input as a thing to be processed by speech synthesizing to the text analyzer 31. The text analyzer 31 analyzes the input text by referring to a dictionary database 34 and an analyzing grammar database 35.

The dictionary database 34 contains a word dictionary describing information on classes, pronunciations, and accents of words. The analyzing grammar database 35 contains analyzing grammar rules such as restrictions on word concatenation about the words described in the word dictionary. The text analyzer 31 performs, based on the word dictionary and the analyzing grammar rules, analyses of the input text, such as a morphemic analysis and a syntactic analysis, and extracts information required for ruled synthesization of speech by a rule synthesizer 32 at the subsequent stage. The information required for ruled synthesization of speech includes, for example, information for controlling the positions of pauses, accents, and intonations, other prosodic information, and phonemic information such as the pronunciations of words.

The information obtained by the text analyzer 31 is supplied to the ruled speech synthesizer 32. The ruled speech synthesizer 32 uses a phoneme database 36 to generate synthesized speech data (digital data) corresponding to the text input to the text analyzer 31.

The phoneme database 36 contains, for example, phoneme-element data in forms representing a combination of a constant and a vowel (indicated by "CV"), a combination of a vowel, a constant, and a vowel (indicated by "VCV"), a combination of a constant, a vowel, and a constant (indicated by "CVC"), etc. The ruled speech synthesizer 32 connects, based on the information from the text analyzer 31, required phoneme-element data, and appropriately adds pauses, accents, and intonations to the connected phoneme-element data, whereby synthesized speech data (speech waveform) corresponding to the text input to the text analyzer 31 is generated.

The generated speech data is supplied to the digital-to-analog converter 33, where it is converted into a speech signal as an analog signal. The speech signal is supplied to a speaker (not shown), from which the synthesized speech corresponding to the text input to the text analyzer 31 is output.

The speech synthesizing unit 3 also generates speech waveform corresponding to the input incomplete sentence or phrase, whereby speech waveforms which correspond to each partial translation result gradually output from the machine translation unit 2 are sequentially generated and synthesized speech corresponding to the waveforms is gradually output. When the final partial translation result is completed as a sentence, the speech synthesizing unit 3 synthesizes, for example, a speech waveform in which the intonation of the end of the sentence lowers (when the sentence is affirmative). When the final partial translation result is not completed as a sentence, the speech synthesizing unit 3 synthesizes a speech waveform in which the intonation of the end of the sentence does not lower.

The speech synthesizing unit 3 performs, in parallel, a synthesizing process for generating a speech waveform by the ruled speech synthesizer 32 and an output process for outputting synthesized speech by converting the speech waveform from digital into analog form in the digital-to-analog converter 33, as required. Specifically, since the ruled speech synthesizer 32 includes a buffer 32A, it temporarily stores the generated speech waveform in the buffer 32A, and the digital-to-analog converter 33 sequentially reads the speech waveform stored in the buffer 32A and performs the output process, whereby the synthesizing process and the output process can be performed in parallel.

The ruled speech synthesizer 32 also manages a pointer for reading the speech waveform from the buffer 32A. By referring to the pointer, the ruled speech synthesizer 32 can obtain recognition of how much the stored speech waveform has been output. For example, in the case where the speech waveform stored in the buffer 32A is "I have a", when the pointer designates "v" of "have", the ruled speech synthesizer 32 recognizes that the digital-to-analog converter 33 is performing the output process for "v".

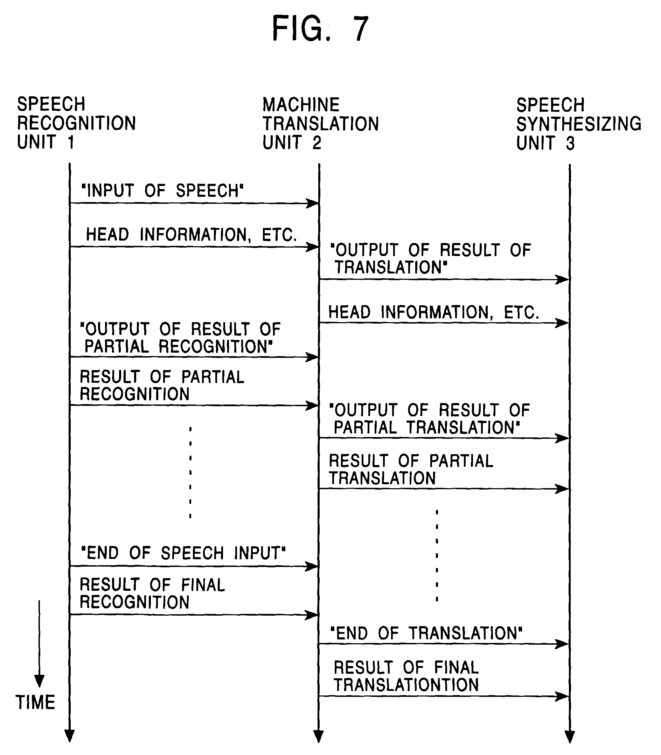

Referring to Fig. 7, data transfer between the speech recognition unit 1 and the machine translation unit 2 (shown in Fig. 1) and data transfer between the machine translation unit 2 and the speech synthesizing unit 3 (shown in Fig. 1) are shown. In Fig. 7, each horizontal arrow indicates a transfer of data, and the vertical direction indicates a lapse of time.

When the speech is input to the speech recognition unit 1, the speech recognition unit 1 outputs an "input-of-speech" message to the machine translation unit 2 for preparation of machine translation. The machine translation unit 2 also outputs head information, etc., to the machine translation unit 2, as required. It is when a head symbol or the like is used in the speech recognition process that the speech recognition unit 1 outputs the head information, etc. Accordingly, when the head symbol or the like is not used, the speech recognition unit 1 outputs no head information, etc.

When receiving the "input-of-speech" message from the speech recognition unit 1, the machine translation unit 2 prepares the speech synthesizing unit 3 for speech synthesizing by outputting, to the speech synthesizing unit 3, an "output-of-result-of-partial-translation" message representing the start of outputting the result of translation. The machine translation unit 2 outputs head information to the speech synthesizing unit 3, as required. It is also when a head symbol or the like is used in machine translation that the machine translation unit 2 outputs the head information, etc. Accordingly, when the head symbol or the like is not used, the machine translation unit 2 outputs no head information, etc.

When the speech recognition unit 1 outputs the "input-of-speech" message, and further outputs the head information, etc., as required, it initiates gradual speech recognition of the input speech. When obtaining a partial translation result, the speech recognition unit 1 outputs an "output-of-result-of-partial-recognition" message to the machine translation unit 2. Subsequently to the "output-of-result-of-partial-recognition" message, the speech recognition unit 1 outputs the obtained partial recognition result to the machine translation unit 2.

When the machine translation unit 2 receives, from the speech recognition unit 1, a pair of the "output-of-result-of-partial-recognition" message and the partial recognition result, the machine translation unit 2 translates the partial recognition result and obtains the corresponding partial translation result. The machine translation unit 2 outputs, to the speech synthesizing unit 3, an "output-of-result-of-partial-translation" message, and subsequently outputs the obtained partial translation result to the speech synthesizing unit 3.

When the speech synthesizing unit 3 receives a pair of the "output-of-result-of-partial-translation" message and the partial translation result, it generates synthesized speech corresponding to the partial translation result.

Subsequently, whenever the speech recognition unit 1 obtains a partial recognition result different from the last output partial recognition result (i.e., a partial recognition result corresponding to part of the last output partial recognition result in which a word or phrase is added, deleted, or changed, the speech recognition unit 1 repeatedly outputs the pair of the partial recognition result and the "output-of-partial-recognition-result" message to the machine translation unit 2. Similarly, whenever the machine translation unit 2 obtains a partial translation result different from the last output partial translation result (i.e., a partial translation result corresponding to part of the last output partial translation result in which a word or phrase is added, deleted, or changed, the machine translation unit 2 repeatedly outputs the pair of the partial translation result and the "output-of-partial translation result" message to the speech synthesizing unit 3. Whenever the speech synthesizing unit 3 receives the partial translation result and the "output-of-partial translation result" message from the machine translation unit 2, the speech synthesizing unit 3 repeatedly performs comparison between the present partial translation result and the last partial translation result and the generation and output of synthesized speech based on the result of the comparison.

As shown in Figs. 5A and 5B, even when the present partial recognition result (e.g., "Kocha-o" which is the second from the top in Fig. 5A) differs from the last partial recognition result (e.g., "Kocha" which is the first from the top in Fig. 5A), there may be a case where the present partial translation result ("tea" which is the second from the top in Fig. 5B) does not differ from the last partial translation result ("tea" which is the first from the top in Fig. 5B). In this case, since, after outputting the last partial translation result, the machine translation unit 2 does not receive a partial recognition result different from the last partial recognition result, the machine translation unit 2 does not output the "output-of-partial-recognition-result" message and a partial translation result corresponding to the present partial recognition result.

After that, when the speech interval ends, in other words, the input of speech to the speech recognition unit 1 ends, the speech recognition unit 1 outputs an "end-of-speech-input" message to the machine translation unit 2. The speech recognition unit 1 subsequently outputs, to the machine translation unit 2, the finally obtained partial recognition result, namely, the result of recognition of the entire input speech (hereinafter also referred to as the "final recognition result").

When receiving the "end-of-speech-input" message and the final recognition result, the machine translation unit 2 translates the final recognition result and obtains the final partial translation result, namely, the result of translation corresponding to the result of recognition of the entire input speech. The machine translation unit 2 outputs, to the speech synthesizing unit 3, an "end-of-translation" message and the final translation result.

When receiving the final translation result, the speech synthesizing unit 3 generates and outputs synthesized speech in which the end of a sentence lowers as described above.

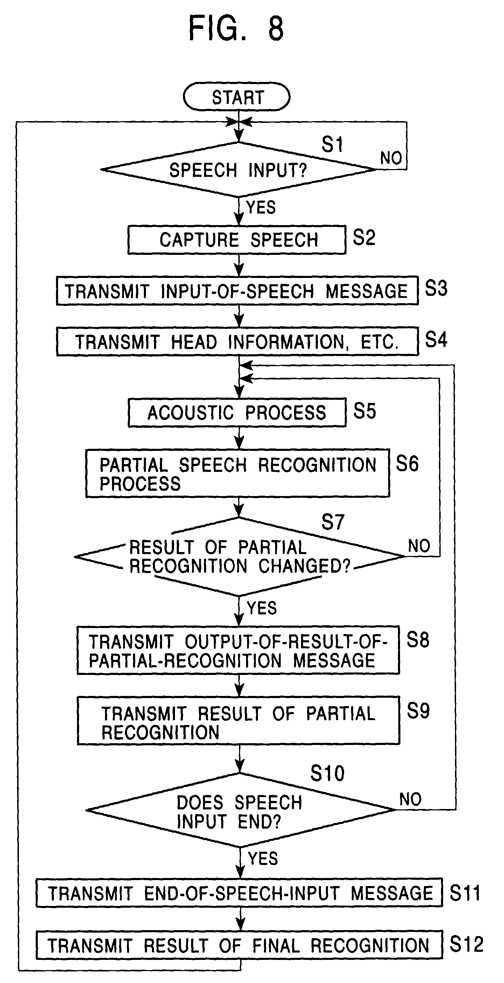

Next, referring to the flowchart shown in Fig. 8, the operation process of the speech recognition unit 1 is described below.

In step S1, the speech recognition unit 1 determines whether speech has been input.

If the speech recognition unit 1 has determined that no speech has been input, the process proceeds back to step S1, and awaits the input of speech.

In step S1, if the speech recognition unit 1 has determined that the speech has been input, the process proceeds to step S2, and captures the speech. Specifically, the input speech is captured by the microphone 11, and is converted by the analog-to-digital converter 12 into speech data as a digital signal. The speech data is supplied to the feature extraction unit 13 and is sequentially stored in the built-in buffer 13A. The above-described capture of the input speech is continuously performed as far as the speech is continuously input.

When the above-described capture of the input speech starts, the process proceeds to step S3. In step S3, the speech recognition unit 1 transmits the "input-of-speech" message to the machine translation unit 2, and the process proceeds to step S4.

In step S4, the speech recognition unit 1 transmits, for example, the head information, etc., which relates to a head symbol, to the machine translation unit 2. If a head symbol indicating the beginning of a sentence is not used, nothing is transmitted in step S4.

In step S5, the feature extraction unit 13 reads the speech data stored in the buffer 13A, and extracts feature parameters by performing an acoustic process on the read speech data. The feature parameters are supplied and stored in the feature buffer 14, and are supplied to the matching portion 15.

In step S6, by using the feature parameters supplied from the feature extraction unit 13, which correspond to the speech data obtained from the start of the input of the speech to the present time, the matching portion 15 obtains a partial recognition result.

In step S6, after reading the speech data stored in the buffer 13A, the feature extraction portion 13 deletes the read speech data in the buffer 13A. The matching portion 15 performs the matching process, using the feature parameters already stored in the feature buffer 14 and feature parameters newly supplied from the feature extraction portion 13. This allows the matching portion 15 to output the partial recognition result correspond to the speech data obtained from the start of the input of the speech to the present time.

After obtaining the partial-recognition result, the process proceeds to step S7. In step S7, the matching portion 15 determines whether the present partial recognition result obtained in step S6 differs from the last partial recognition result obtained in step S6.

If the matching portion 15 has determined in step S7 that there is no difference between the present partial recognition result and the last partial recognition result because they coincide with each other, the process proceeds back to step S5, and the same steps are subsequently repeated.

In step S7, the determination of whether the present partial recognition result differs from the last partial recognition result is performed by comparing words constituting the present result and words constituting the last result. If the words coincide between the present and last results, the matching portion 15 determines that the present partial recognition result coincides with the last partial recognition result, even if their positional relationships (e.g., a start time and an end time relating to each word) differ.

If the matching portion 15 has determined in step S7 that the present partial recognition result differs from the last partial recognition result, the process proceeds to step S8.

In step S8, the speech recognition unit 1 transmits the "output-of-partial-recognition-result" message to the machine translation unit 2, and the process proceeds to step S9.

In step S9, the speech recognition unit 1 transmits the present partial recognition result to the machine translation unit 2, and the process proceeds to step S10.

In step S10, the process determines whether the input of the speech has terminated, in other words, whether the speech interval ends.

If the process has determined in step S10 that the speech interval has not terminated, in other words, when speech data, from which feature parameters have not been extracted yet, is stored in the buffer 13A, the process proceeds back to step S5, and the same steps are subsequently repeated.

If the process has determined in step S10 that the speech interval has terminated, in other words, when the speech data is not stored in the buffer 13A, the process proceeds to step S11.

In step S11, the speech recognition unit 1 transmits the "end-of-speech-input" message to the machine translation unit 2, and the process proceeds to step S12.

In step S12, the speech recognition unit 1 obtains and transmits the partial recognition result of the entire speech interval, namely, the final recognition result of the input speech, to the machine translation unit 2, and the process proceeds back to step S1. The process awaits the input of new speech, and the same steps are subsequently repeated.

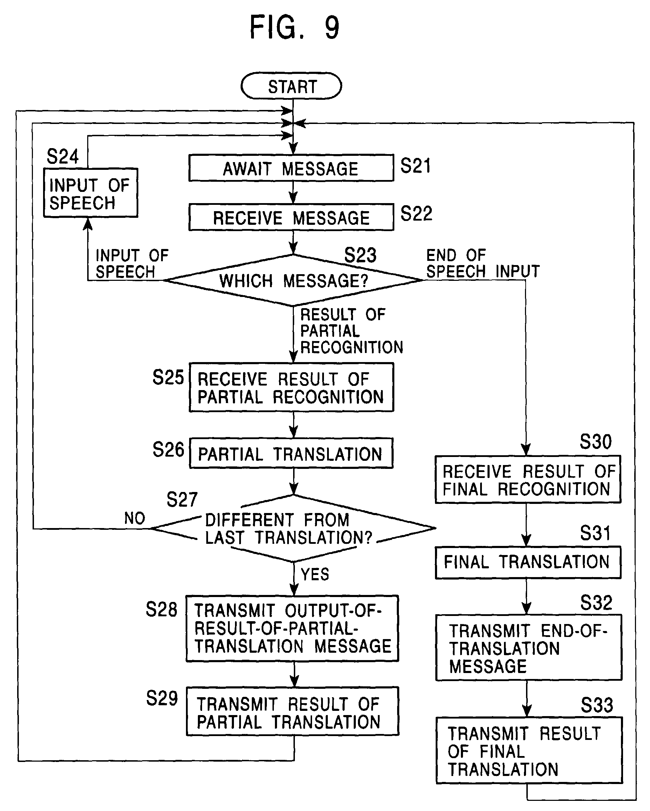

Referring to the flowchart shown in Fig. 9, the operation process of the machine translation unit 2 is described below.

In step S21, the machine translation unit 2 awaits transmission of a message from the speech recognition unit 1. When a message is transmitted from the speech recognition unit 1, the process proceeds to step S22.

In step S22, the machine translation unit 2 receives the transmitted message.

In step S23, the machine translation unit 2 determines the type of the message from the speech recognition unit 1.

If the machine translation unit 2 has determined in step S23 that the received message is an "input-of-speech" message, the process proceeds to step S24.

In step S24, the machine translation unit 2 prepares for translation of a partial recognition result to be subsequently transmitted, and proceeds back to step S21. Subsequently, the same steps are repeatedly performed. When the speech recognition unit 1 transmits, to the machine translation unit 2, the head information, etc., subsequently to the "input-of-speech" message, the machine translation unit 2 also receives the head information, etc., in step S24.

If the machine translation unit 2 has determined in step S23 that the received message is an "output-of-partial-recognition-result" message, the process proceeds to S25.

In step S25, the machine translation unit 2 receives a subsequently transmitted message.

In step S26, the machine translation unit 2 translates the partial recognition result from the speech recognition unit 1 and obtains a partial translation result as a translation corresponding to the partial recognition result, and the process proceeds to step S27.

In step S27, the machine translation unit 2 determines whether the present partial translation result obtained in step S26 differs from the last partial translation result obtained in step S26.

If the machine translation unit 2 has determined in step S27 that the present partial translation result coincides with the last partial translation result, the process proceeds back to step S21, and the same steps are subsequently repeated.

If the machine translation unit 2 has determined in step S27 that the present partial translation result differs from the last partial translation result, the process proceeds to step S28.

In step S28, the machine translation unit 2 transmits an "output-of-partial-translation-result" message to the speech synthesizing unit 3, and the process proceeds to step S29.

In step S29, the machine translation unit 2 transmits the present partial translation result to the speech synthesizing unit 3, and the process proceeds back to step S21. Subsequently, the same steps are repeatedly performed.

In step S23, if the machine translation unit 2 has determined that the received message is an "end-of-speech-input" message, the process proceeds to step S30.

In step S30, the machine translation unit 2 receives the final recognition result subsequently transmitted from the speech recognition unit 1, and the process proceeds to step S31.

In step S31, the machine translation unit 2 translates the final recognition result from the speech recognition unit 1 and obtains the final translation result corresponding to the final recognition result, and the process proceeds to step S32.

In step S32, the machine translation unit 2 transmits an "end-of-translation" message to the speech synthesizing unit 3, and the process proceeds to step S33.

In step S33, the machine translation unit 2 transmits the final translation result obtained in step S31 to the speech synthesizing unit 3, and the process proceeds back to step S21. Subsequently, the same steps are repeatedly performed.

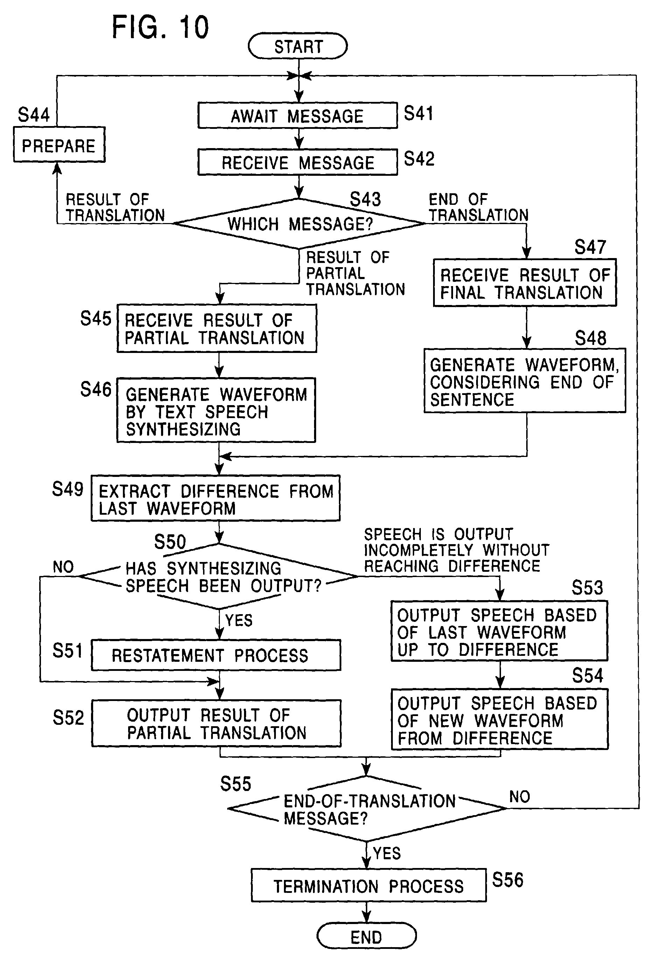

Next, referring to the flowchart shown in Fig. 10, the operation process of the speech synthesizing unit 3 is described below.

In step S41, the speech synthesizing unit 3 awaits transmission of a message from the machine translation unit 2. When a message is transmitted from the machine translation unit 2, the process proceeds to step S42.

In step S42, the speech synthesizing unit 3 receives the transmitted message.

In step S43, the speech synthesizing unit 3 determines the type of the received message.

If the speech synthesizing unit 3 has determined in step S43 that the received message is the "output-of-translation-result" message, the process proceeds to step S44. In step S44, the speech synthesizing unit 3 prepares for the generation of synthesized speech corresponding to a partial translation result to be subsequently transmitted, and the process proceeds back to step S41. Subsequently, the same steps are repeatedly performed. When the machine translation unit 2 transmits, to the speech synthesizing unit 3, the head information, etc., subsequently to the "output-of-translation-result" message, the speech synthesizing unit 3 also receives the head information, etc., in step S44.

If the speech synthesizing unit 3 has determined in step S43 that the received message is the "output-of-partial-translation-result" message, the process proceeds to step S45, and receives a subsequently transmitted partial translation result.

In step S46, the speech synthesizing unit 3 controls the ruled speech synthesizer 32 to generate a speech waveform corresponding to the partial translation result from the machine translation unit 2, and the process proceeds to step S49. For the partial translation result transmitted subsequently to the "output-of-partial-translation-result" message, there is a possibility that a word or phrase follows it. Accordingly, a speech waveform is generated so that its end does not lower.

If the speech synthesizing unit 3 has determined in step S43 that the received message is the "end-of-translation" message, the process proceeds to step S47. In step S47, the speech synthesizing unit 3 receives the subsequently transmitted final translation result, and the process proceeds to step S48.

In step S48, the speech synthesizing unit 3 controls the ruled speech synthesizer 32 to generate a speech waveform corresponding to the final translation result from the machine translation unit 2, and the process proceeds to step S49. For the partial translation result subsequently to the "end-of-translation" message, there is no possibility that a word or phrase follows. Accordingly, based on the final translation result, a speech waveform is generated so that the intonation of synthesized speech lowers or rises. In other words, when the final translation result is a declarative sentence, a speech waveform is generated so that the end of synthesized speech lowers. When the final translation result is a question, a speech waveform is generated so that the end of synthesized speech rises.

In step S49, the speech synthesizing unit 3 compares, for example, the present speech waveform obtained in step S46 and the last speech waveform obtained in step S46, and extracts a portion (hereinafter also referred to as a "differential waveform") of the present speech waveform which differs from the last speech waveform.

By way of example, when the last speech waveform corresponds to the partial translation result "I have a cup of coffee", and the present partial translation result corresponds to the partial translation result "I had a cup of coffee", the speech synthesizing unit 3 extracts the portion "had" of the present speech waveform, as a differential waveform. Actually, in the case, there is a difference in even a connection (articulatory portion) between the present and last speech waveforms. Thus, accurately, from the present speech waveform, a portion from the latter half of "I" just before "had" to the first half of "a" just after "had" is extracted as a differential waveform which differs from the last speech waveform.

If the speech waveform corresponding to each partial translation result obtained in step S46 is unchanged and output as speech, the same synthesized speech is repeatedly output. Accordingly, the reason that the differential waveform is extracted in step S49 is to prevent the repeated output.

The process proceeds to step S50, and the speech synthesizing unit 3 determines whether synthesized speech of a portion of the last partial translation result, which corresponds to the differential waveform obtained in step S49, has already been output.

By way of example, when the last speech waveform corresponds to the partial translation result "I have", and the present speech waveform corresponds to the partial translation result "I have a cup of coffee", the differential waveform between the last and present results is a portion of the present speech waveform from the latter half of "have" to the end of "a cup of coffee", with the above-described articulatory connection taken into consideration. In step S50, the speech synthesizing unit 3 determines whether the latter half of "have" in the last translation result, which corresponds to the beginning of the differential waveform, has been output.

If the speech synthesizing unit 3 has determined in step S50 that synthesized speech corresponding to the portion of the last partial translation result which corresponds to the differential waveform has not been output yet, in other words, when the output of synthesized speech up to a position in the last speech waveform, which corresponds to the beginning of the differential waveform, has not been performed yet, the process proceeds to step S53. In step S53, the speech synthesizing unit 3 continuously outputs the last speech waveform up to a position in the last speech waveform which is just before the differential waveform (or outputs synthesized speech corresponding to the last speech waveform). When the speech synthesizing unit 3 terminates the output of the last speech waveform which corresponds to the position just before the beginning of the differential waveform, the process proceeds to step S54. In step S54, the speech synthesizing unit 3 starts the output of the present speech waveform from the position corresponding to the beginning of the differential waveform, and the process proceeds to step S55.

Accordingly, for example, when the last speech waveform corresponds to the partial translation result "I have a cup of coffee", and the present speech waveform corresponds to the partial translation result "I had a cup of coffee", in the present speech waveform "I had a cup of coffee", a portion from the latter half of "I" just before "had" to the first half of "a" just after "had" is used as a differential waveform. However, the last speech waveform "I have a cup of coffee" is output as synthesized speech, up to a position just before the latter half of "I" which corresponds to the beginning of the differential waveform. In other words, the last speech waveform up to the first half of "I" is output as synthesized speech. After that, the output of the present speech waveform is initiated from the latter half of "I" in the present speech waveform which corresponds to the beginning of the differential waveform.

Also, for example, when the last speech waveform corresponds to the partial translation result "I have", and the present speech waveform corresponds to the partial translation result "I have a cup of coffee", a portion of the present speech waveform "I have a cup of coffee" from the latter half of "have" to the end of "a cup of coffee" is used as a differential waveform, as described above. However, the last speech waveform "I have" is output as synthesized speech, up to a position just before the latter half of "have" which corresponds to the beginning of the differential waveform. In other words, the last speech waveform is output as synthesized speech, up to the first half of "have". After that, the output of the present speech waveform is initiated from the latter half of "have" which corresponds to the beginning of the differential waveform.

In step S50, if the speech synthesizing unit 3 has determined that synthesized speech of the portion of the last partial translation result which corresponds to the differential waveform has already been output, in other words, when the speech synthesizing unit 3 has already output the last speech waveform after the position corresponding to the beginning of the differential waveform, the process proceeds to step S51, and the speech synthesizing unit 3 performs a restatement.

By way of example, when the last speech waveform corresponds to the partial translation result "I have a cup of coffee", and the present partial translation result corresponds to the partial translation result "I had a cup of coffee", in the present speech waveform "I had a cup of coffee", a portion from the latter half of "I" just before "had" to the first half of "a" just after "had" is used as a differential waveform, as described above. However, when the last speech waveform "I have a cup of coffee" after the latter half of "I" which corresponds to the beginning of the differential waveform has already been output as synthesized speech, in other words, for example, when the last speech waveform up to "have" has already been output as synthesized speech, the word "have" must be restated as "had" in the present speech waveform.

Also, for example, when the last speech waveform corresponds to the partial translation result "have a cup of coffee", the present partial translation result corresponds to the partial translation result "I have a cup of coffee", and the last speech waveform after "have" has already been output as synthesized speech, the word "have" must be restated as "I have" and the remaining words in the present speech waveform.

In the restatement process, processing for outputting natural synthesized speech for restatement is performed.

Specifically, the last speech waveform is unchanged and output as synthesized speech, up to, for example, an appropriate separation such as a break in words or phrases, or a pause. After that, restating synthesized speech for a natural link to restatement is output. In other words, when synthesized speech is Japanese, synthesized speech is generated which is similar to speech for a mistake or hesitation in an everyday conversation, such as "A" (Oh!), "Ja-nakute" (not), "Machi-gaeta" (I made a mistake), or "Otto" (Oh!). Similarly, when synthesized speech is English, synthesized speech such as "Woops", "Well", or "I mean" is output.

After that, the process proceeds to step S52. In step S52, the present speech waveform is output as synthesized speech, and the process proceeds to step S55.

In the restatement process in step S51, without outputting restating synthesized speech, the speech synthesizing unit 3 may output the present speech waveform in step S52 after pausing for a while.

In addition, the type of restating synthesized speech, or the position of initiating the output of the present speech waveform in step S52 after the restatement process performed in step S51 can be selected by, for example, the amount of requiring restatement in already output synthesized speech.

Specifically, in the case where synthesized speech is Japanese, when a portion to restate is short, such as the need for restatement from one immediately output word, "A" (Oh!), which is relatively short restating synthesized speech, is output, and the present speech waveform can be subsequently output from a position corresponding to the beginning of a differential waveform. Conversely, when a portion to restate is long, "Machigae-mashita" (I made a mistake), which is relatively long restating synthesized speech, may be output and the present speech waveform may be subsequently output from its beginning (restatement from the beginning is output).

The case where a portion of the last partial translation result which corresponds to a differential waveform has not been output yet is divided into two: a case where, although the last speech waveform has already been output, a range up to a position in the last speech waveform which corresponds to the differential waveform has not been output yet; and a case where even the last speech waveform has not been output yet. In the case where, although the last speech waveform has already been output, a range up to a position in the last speech waveform which corresponds to the differential waveform has not been output yet, the process proceeds to steps S53 and S54. In the case where even the last speech waveform has not been output yet, the process skips over step S51 and proceeds to step S52, where the last speech waveform is eliminated and the present speech waveform is treated as what to be output. The process proceeds to step S55. In other words, the last speech waveform stored in the buffer 32A is overwritten by the present speech waveform so that their beginnings coincide with each other, and the present speech waveform is output from the position designated by the above-described pointer.

In step S55, the speech synthesizing unit 3 determines whether the message received in step S42 is the "end-of-translation" message.

If the speech synthesizing unit 3 has determined in step S55 that the received message is not the "end-of-translation" message, the process proceeds back to step S42, and the same steps are subsequently repeated.

If the speech synthesizing unit 3 has determined in step S55 that the received message is the "end-of-translation" message, a termination process such as the deletion of the storage content of the buffer 32A included in the ruled speech synthesizer 32. The process proceeds back to step S41, and the same steps are subsequently repeated.

In the above-described gradual translation, it is preferable for the machine translation unit 2 to perform the translation process so that word order does not differ before and after the translation process.

The word-order-maintained translation can be performed, for example, by detecting key words from the partial recognition result to be translated by the machine translation unit 2, and treating, as a translation unit, the result of dividing the partial recognition result with the key word.

Specifically, for example, when Japanese is translated into English, conjunctive particles such as "...ga" and "...node", portions in ceasing forms, adnominal modification portions, particles such as "...nowa", "...noni", "...to", "...nitsuite", and "...(surukoto)niyotte", etc., can be used as keywords. By treating, as gradual translation units, portions (in Japanese) obtained by dividing a Japanese text with such keywords, translation with word order relatively maintained is possible.

The portions in ceasing forms mean, for example, the words, "tabe", "nomi", and "shuppatsu-shita", in the sentence, "Pan-o tabe, gyunyu-o nomi, shuppatsu-shita" (I ate bread, drank milk, and started), formed by the conjunctive forms of conjugative words. The adnominal modification portions mean, for example, a portion in which the conjunctive form of a conjugative word is followed by a noun, such as "Sakujitu-katta-bakari-no-hon" (the book that I bought yesterday), which is a description using a relative pronoun when being translated into English.

By way of example, when the results of recognizing the Japanese speech, "Gojun-ga okiku kononaru-node, gojun-o tamotta-mama nihongo-o eigo-ni hon-yakusu-nowa muzukashii-to iwarete-imasu." (Because of greatly different word order, with the word order kept, to translate Japanese into English is difficult, they say.) is gradually translated, the machine translation unit 2 detects key words from partial recognition results sequentially output from the speech recognition unit 1.

Here, it is assumed that, from the Japanese speech, "Gojun-ga okiku kononaru-[node], gojun-o tamotta-[mama] nihongo-o eigo-ni hon-yaku-suru-[nowa] muzukashii-to iwarete-imasu.", each bracketed word is detected as a key word.

The machine translation unit 2 uses the detected key words to divide the Japanese speech, "Gojun-ga okiku kononaru-[node], gojun-o tamotta-[mama] nihongo-o eigo-ni hon-yaku-suru-[nowa] muzukashii-to iwarete-imasu.", into, for example, the phrases, "Gojun-ga okiku kononaru-node", "gojun-o tamotta-mama", "nihongo-o eigo-ni hon-yaku-suru-nowa", "muzukashii-to", and "iwarete-imasu." as translation units. The machine translation unit 2 translates each translation unit.

If "Gojun-ga okiku kononaru-node" is translated into "Because of greatly different word order", "gojun-o tamotta-mama" is translated into "with the word order kept", "nihongo-o eigo-ni hon-yaku-suru-nowa" is translated into "to translate Japanese into English", "muzukashii-to" is translated into "is difficult", and "iwarete-imasu." is translated into ", they say.", the English sentence, "Because of greatly different word order, with the word order kept, to translate Japanese into English is difficult, they say.", is obtained as the final translation result. Accordingly, a translation result can be obtained which has relatively unchanged word order compared with that of the Japanese sentence before translation.

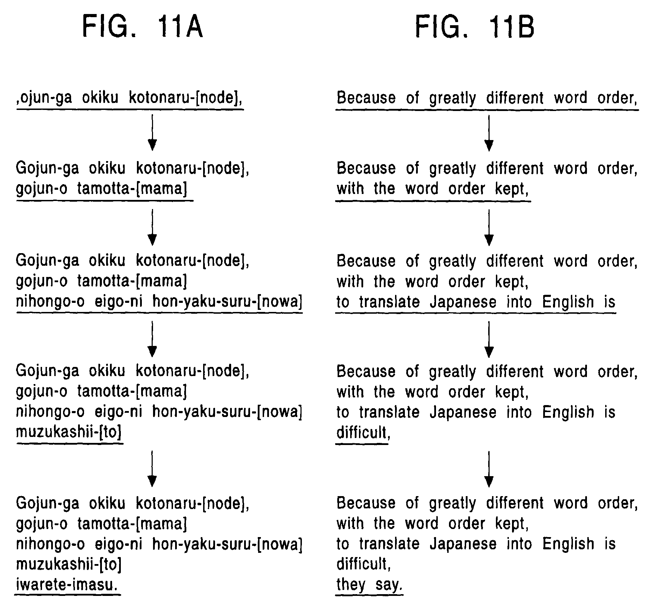

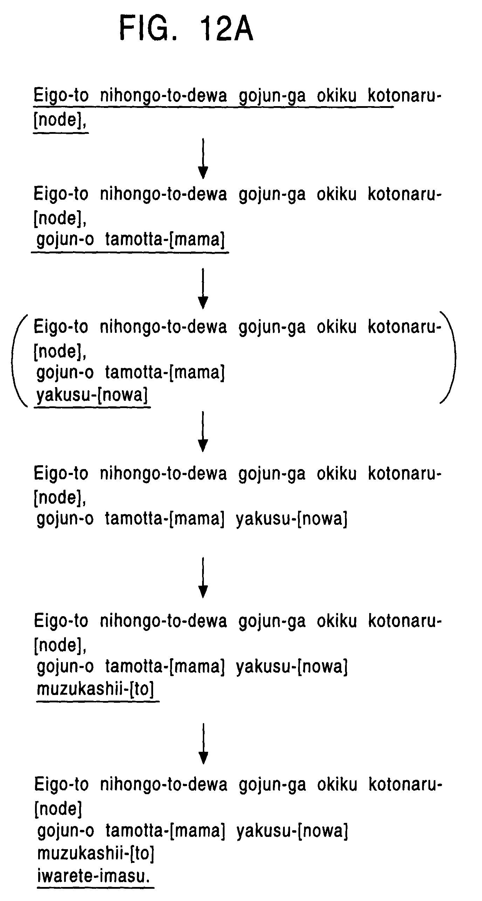

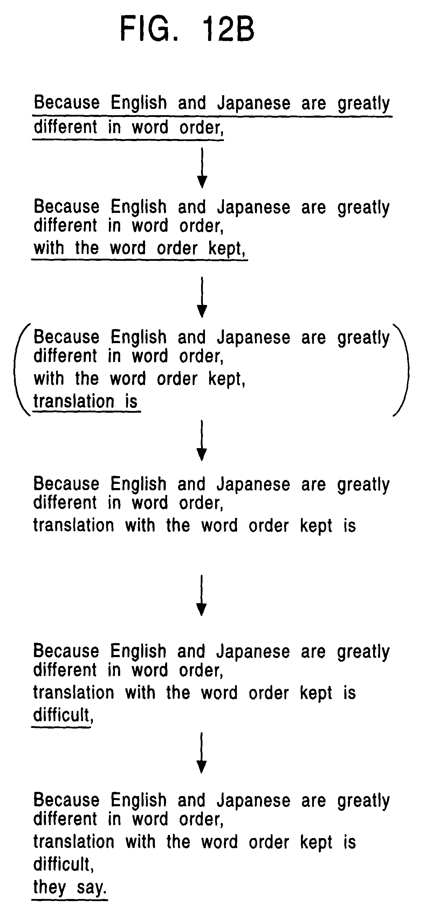

The above-described process is shown in Figs. 11A and 11B. Fig. 11A shows the partial recognition results, and Fig. 11B shows the partial translation results. In Figs. 11A and 11B (also in Figs. 12A and 12B), each double-ruled portion indicates an addition to the last partial recognition result or a partial translation result.

When the final translation unit, "iwarete-imasu." is translated into English, it is common to insert "It is said that" or the like to the beginning of the translation result. In the process of performing gradual translation and sequentially outputting resultant partial translation results, the above-described insertion increases a possibility that restatement from the beginning must be performed. Accordingly, such restatement is prevented by translating the Japanese sentence into two English parts, namely, the first part, "Because of greatly different word order, with the word order kept, to translate Japanese into English is difficult", which corresponds to "Gojun-ga okiku kononaru-node, gojun-o tamotta-mama nihongo-o eigo-ni hon-yaku-suru-nowa muzukashii-to", and the latter part, "they say", which corresponds to "iwarete-imasu.".

For other Japanese expressions such as "...-to itta.", "...-to omoimasu.", and "...-kamo-shirenai.", restatement can be prevented by similar translation techniques.

Furthermore, in the case where the Japanese sentence, "Gojun-ga okiku kononaru-node, gojun-o tamotta-mama nihongo-o eigo-ni hon-yaku-suru-nowa muzukashii-to iwarete-imasu.", is not gradually translated but is translated after the entirety of the Japanese sentence is input, it is possible in general that a translation of the Japanese sentence is "Since there is a large difference in word order, it is said that translation of Japanese into English with the word order kept is difficult.".

The sentence translation result can be output by outputting the results of gradual translation in synthesized speech, and can be displayed on the display unit 4. The above-described sentence translation result can be also supplied, as the final translation result output with the "end-of-translation" message described using Fig. 7, to the speech synthesizing unit 3.

Next, by way of example, in the case where the Japanese sentence, "Eigo-to Nihongo-to-dewa gojun-ga okiku kononaru-node, gojun-o tamotta-mama yakusu-nowa muzukashii-to iwarete-imasu.", is divided into translation units, as described above, the translation units are, for example, "Eigo-to Nihongo-to-dewa gojun-ga okiku kononaru-[node]", "gojun-o tamotta-[mama]", "yaku-suru-[nowa]", "muzukashii-[to]", and "iwarete-imasu.", where each bracketed portion indicates a key word.

According to the above-described process, the machine translation unit 2 translates the first translation unit, "Eigo-to Nihongo-to-dewa gojun-ga okiku kononaru-node", into, for example, "Because English and Japanese are greatly different in word order, ", which is output as a partial translation result.

The second translation unit, "gojun-o tamotta-mama", is translated into, for example, "with the word order kept", and "Because English and Japanese are greatly different in word order, with the word order kept", obtained by adding the translation result to the last translation result is output as a partial translation result.

After that, the process proceeds to the third translation unit "yakusu-nowa". If partial translation of only the third translation unit, the third translation unit is translated into, for example, "translation is", and this translation result is added to the last translation result, "Because English and Japanese are greatly different in word order, with the word order kept", whereby "Because English and Japanese are greatly different in word order, with the word order kept, translation is" is obtained.

Nevertheless, partial translation of a relatively short translation unit such as "yakusu-nowa" causes the corresponding translation result to tend to be unnatural. For example, in the example described here, although it is clear in the Japanese text that "gojun-o tamotta-mama" modifies "yakusu", it is unclear in the translation result whether "with the word order kept," modifies "translation".

Accordingly, for the relatively short translation unit such as "yakusu-nowa", the translation result alone is not translated but partial translation of a new translation unit generated by adding the translation unit to the last translation unit is performed. In this example, the partial translation result, "with the word order kept", corresponding to "gojun-o tamotta-mama" is temporarily deleted, the translation unit, "gojun-o tamotta-mama yakusu-nowa", is generated by adding "yakusu-nowa" to the adjacent translation unit, "gojun-o tamotta-mama", and partial translation of the generated translation unit is performed. As a result, "translation with the word order kept is" is obtained. This way of translation clarifies modification of "with the word order kept" to "translation".

As described above, in accordance with gradual generation of the partial recognition result, part of the partial recognition result may change. However, a range of change is limited within the translation unit, and the entire translation result does not greatly change.

The process that has been described is shown in Figs. 12A and 12B. Fig. 12A shows each partial recognition result, Fig. 12B shows each partial translation result. In Figs. 12A and 12B, each double-ruled portion indicates part of the last partial recognition result or the partial translation result which has been changed. The reason that the partial recognition result and the partial translation result in the third from the top are parenthesized is to show that the third partial translation result is virtual and is not actually generated. At the time that the machine translation unit 2 has determined that "yakusu-nowa" included in the partial recognition result is short, partial deletion of the partial translation result (deletion of "with the word order kept"), reconfiguration of the translation unit (the generation of "gojun-o tamotta-mama yakusu-nowa"), and re-execution of partial translation (the generation of "translation with the word order kept") are performed, so that the forth results shown in Figs. 12A and 12B are obtained.

When a change is generated in process of the partial translation result, as described above, it is determined whether restatement must be performed in accordance with the amount of outputting the partial translation result by the speech synthesizing unit 3. When the speech synthesizing unit 3 has not yet output a difference (changed part) (e.g., when a portion adjacent to the "different" part is output), no restatement is required. Conversely, when the speech synthesizing unit 3 has already output the difference (e.g., a portion adjacent to the "kept" part is output), restatement is required, and speech synthesizing is temporarily interrupted. After that, the "restating speech" is output, and the speech synthesizing is restarted from a position at which the change is generated (e.g., "translation" as the fourth partial translation result from the top in Fig. 12B).

Translation of "yakusu-nowa" and the remaining words, namely. "muzukashii-to iwarete-imasu", is identical to the example shown in Figs. 11A and 11B.

As described above, by comparing the gradually generated present partial translation result and the last partial translation result, and controlling output of synthesized speech based on the comparison result, a translation obtained by gradual translation can be gradually provided to the user. This can reduce a time from the input of speech to provision of the corresponding translation result. Moreover, the user can understand speech from another user in a short time, which enables the user to respond to the speech instantly from the speech. Therefore, the use of the speech translation system enables a smooth communication between the users. According to circumstances, the use of restatement can entertain the users.

In this embodiment, a translation obtained by gradual translation is provided to the user in the form of synthesized speech. However, the translation may be provided to the user by displaying the translation on the display unit 4.

The machine translation unit 2 may be supplied with not the partial recognition result but an input corresponding to an operation of a keyboard or the like.

In this embodiment, just before transmitting the partial recognition result from the speech recognition unit 1 to the machine translation unit 2, the "output-of-partial-recognition-result" is transmitted. However, the type of message to be transmitted just before transmitting the partial recognition result may be divided.

By way of example, when the present partial recognition result is obtained by adding a word or phrase to the last partial recognition result, specifically, when the present partial recognition result is "kocha-o", the last partial recognition result is "kocha", and the present partial recognition result is obtained by adding the particle "o" to the last partial recognition result, an "addition" message representing the addition of the particle can be transmitted. When the present partial recognition result includes a word or phrase obtained by changing at least a portion of the last partial recognition result, specifically, when the present partial recognition result is "ame-ga futte" (it rains), the last partial recognition result is "ame-ga" (candy), and the present partial recognition result is obtained by not only adding "futte" to the last partial recognition result but also changing "ame" (candy) in the last partial recognition result into "ame" (rain), a "modification" message representing the word change can be transmitted.

In addition, together with the "addition" message, the speech recognition unit 1 can transmit, to the machine translation unit 2, not the entirety of the partial recognition result but only an addition to the last partial recognition result. When the present partial recognition result is "kocha-o", and the last partial recognition result is "kocha", only "o" as an addition is transmitted. The machine translation unit 2 can obtain the present partial recognition result "kocha-o" by adding the addition "o" to the last partial recognition result "kocha". Accordingly, no problem occurs.

Similarly, by dividing the message to be transmitted before transmitting the partial translation result from the machine translation unit 2 to the speech synthesizing unit 3 into an "addition" message and a "modification" message as described above, only an addition to the last partial recognition result can be used as the partial translation result to be transmitted together with the "addition" message.

In this embodiment, the speech synthesizing unit 3 obtains a differential waveform by comparing the present speech waveform and the last speech waveform, and the output of synthesized speech (speech waveform) is controlled based on the differential waveform. However, the output of the synthesized speech can be controlled, for example, based on the result of comparison between the texts of the present and last partial translation results output from the machine translation unit 2.

Specifically, for example, when the last partial translation result is "〈s〉 I have a cup of coffee 〈/s〉" and the present partial translation result is "〈s〉 I had a cup of coffee 〈/s〉", both results are compared, and a difference of the present partial translation result from the last partial translation result can be extracted as a differential translation result corresponding to the above-described differential waveform. In this example, simply, "had" in the present partial translation result is extracted. However, it is preferable that, by considering the above-described word connection, "I had a" including the adjacent words be extracted as a differential translation result. Based on the thus extracted differential translation result, the output of the synthesized speech can be controlled similarly to the above-described case based on the differential waveform.

In the above-described example, "〈s〉" indicates that the following word is a word positioned at the head of a sentence, and "〈/s〉" indicates that a word just before the symbol is a word positioned at the end of a sentence. Accordingly, it is clear that a word before which "〈s〉" is not positioned or a word after which "〈/s〉" is not positioned is a word positioned in a sentence excluding its beginning and end. It is preferable to compare the present partial translation result and the last partial translation result by considering that each word is at the beginning or end of a sentence or in the sentence.

Due to algorithm for generating the partial translation result by the machine translation unit 2, the processing speed of the speech translation system, etc., a time from the generation of the last partial translation result and the present partial translation result may increase. In such a case, the synthesized speech output from the speech synthesizing unit 3 also has a pause. Specifically, when synthesized speech corresponding to the translation result "I have a ..." is output, there may be a case where, after a lapse of time from the output of the synthesized speech "I", the synthesized speech "have a ..." is output. In this case, the entire synthesized speech becomes unnatural. Accordingly, when a time from the output of synthesized speech to the output of the next synthesized speech is a predetermined value or greater, in the speech synthesizing unit 3, after outputting synthesized speech, the synthesized speech can be output again and the next synthesized speech can be output. In other words, in the above-described example, in the speech synthesizing unit 3, after outputting the synthesized speech "I", the synthesized speech "I" can be output again and the next synthesized speech "have a ..." can be output. In this example, the synthesized speech is output from "I ..." to "I have a ...". Thus, a time from the output of synthesized speech to the output of the next synthesized speech, which is experienced by the user, can be shortened. However, the actual time cannot be shortened.

The above-described consecutive processes can be performed by hardware or by software. When the above-described consecutive processes are performed by software, programs constituting the software are installed in a multipurpose computer or the like.

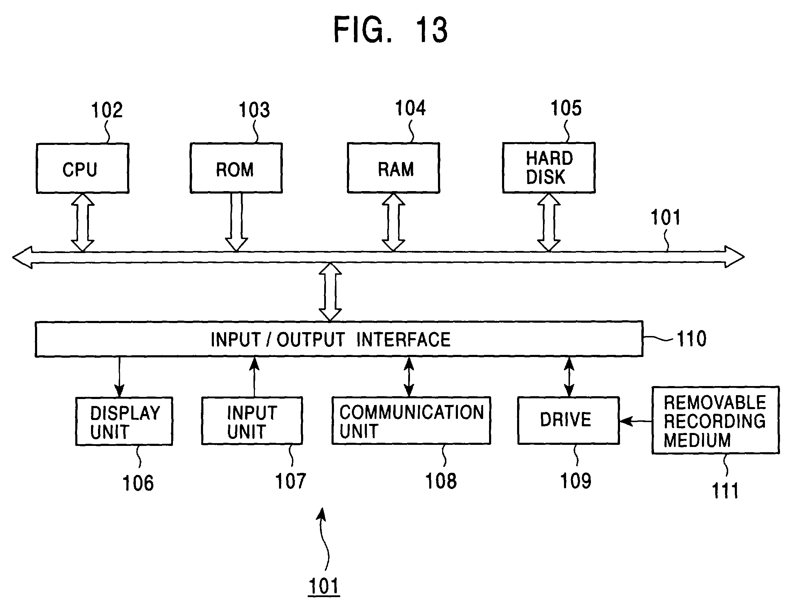

Referring to Fig. 13, an example of a computer in which the programs for executing the above-described consecutive processes are installed is shown.

Each program can be recorded on a hard disk 105 or a read-only memory (ROM) 103 as a recording medium built into the computer.

Otherwise, each program can be temporarily or permanently stored (recorded) in a removable recording medium 111 such as a floppy disk, a compact-disk read-only memory, a magneto-optical disk, a digital versatile disk, a magnetic disk, or a semiconductor memory. This type of removable recording medium 111 can be provided as so-called "package software".

In addition to the installation of each program from the removable recording medium 111 into the computer, by transferring each program from a download site to the computer by radio via a digital broadcasting satellite, or by transferring each program by wire via a network such as the Internet, the transferred program can be received by a communication unit 108, and can be installed in the built-in hard disk 105.

In this Specification, processing steps that describe each program for controlling the computer to perform various processing do not always need to be time-sequentially executed in the order indicated by a flowchart, and include processes to be executed in parallel or separately (e.g., parallel processes or object-based processes).

The program may be executed by one computer or may be distributively executed by a plurality of computers. The program may be transferred and executed in a remote computer.

The computer includes a central processing unit (CPU) 102. An input/output interface 110 is connected to the CPU 102 via a bus 101. When the user operates an input unit 107 (such as a keyboard or a mouse) to input a command to the CPU 102 via the input/output interface, the CPU 102 executes the program stored in the ROM 103. The CPU 102 loads in a random access memory (RAM) 104 and executes each program stored in the hard disk 105, each program installed in the hard disk 105 after being transferred via the satellite or the network and being received by the communication unit 108, or each program installed in the hard disk 105 after being read from the removable recording medium 111 loaded into a drive 109. The CPU 102 performs processing in accordance with the above-described flowcharts. Under control of the CPU 102, the processing result is output from an output unit 106 (such as a liquid crystal display and a speaker) via the input/output interface 110, is transmitted from the communication unit 108, or is recorded on the hard disk 105.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

## Claims

1. A translating apparatus for translating a text gradually input in a predetermined language and outputting a translation in another language, said translating apparatus comprising:
translating means for gradually generating the translation by gradually translating the gradually input text;
providing means for gradually providing the gradually generated translation; and
control means for controlling, based on the result of comparison between the present gradually-generated translation and the last translation, the provision of the present translation.

2. A translating apparatus according to Claim 1, wherein said control means controls the provision of the present translation so that a portion of the present translation which is newly added to the last translation is provided.

3. A translating apparatus according to Claim 1, wherein said control means controls the provision of the present translation so that the present translation includes a portion in which at least part of the last translation is changed, and when a portion of the last translation which corresponds to the changed part has already been provided, the present translation is provided again.

4. A translating apparatus according to Claim 3, wherein said control means controls the provision of the present translation so that the present translation is provided again after a message representing re-provision of the present translation is provided.

5. A translating apparatus according to Claim 1, further comprising speech recognition means for gradually recognizing input speech and gradually outputting the result of the speech recognition as the input text.

6. A translating apparatus according to Claim 1, wherein said providing means generates and outputs synthesized speech corresponding to the present translation.

7. A translating method for translating a text gradually input in a predetermined language and outputting a translation in another language, said translating method comprising the steps of:
gradually generating the translation by gradually translating the gradually input text;
gradually providing the translation gradually generated in the translating step; and
controlling, based on the result of comparison between the present translation gradually generated in the translating step and the last translation, the provision of the present translation.

8. A computer-readable recording medium containing a program for controlling a translating process for translating a text gradually input in a predetermined language and outputting a translation in another language,
said program comprising the steps of:
gradually generating the translation by gradually translating the gradually input text;
gradually providing the translation gradually generated in the translating step; and
controlling, based on the result of comparison between the present translation gradually generated in the translating step and the last translation, the provision of the present translation.

9. A computer program product arranged to carry out the method of claim 7, when run on a computer.
